Europäisches Patentamt

European Patent Office

Office européen des brevets

(11) Numéro de publication: **0 344 054 B1**

(12)

# FASCICULE DE BREVET EUROPEEN

(45) Date de publication de fascicule du brevet: **04.05.94**

(51) Int. Cl.⁵: **G11B 15/43**, G11B 15/26, G11B 15/61

(21) Numéro de dépôt: **89401399.4**

(22) Date de dépôt: **23.05.89**

(54) Dispositif d'entraînement de bande pour enregistreur magnétique et enregistreur pourvu d'un tel dispositif.

(30) Priorité: **26.05.88 FR 8806994**

(43) Date de publication de la demande:
**29.11.89 Bulletin 89/48**

(45) Mention de la délivrance du brevet:
**04.05.94 Bulletin 94/18**

(84) Etats contractants désignés:
**DE ES GB IT NL SE**

(56) Documents cités:
DE-A- 3 003 225     FR-A- 2 130 346
FR-A- 2 519 789     GB-A- 901 620
GB-A- 2 004 405     US-A- 3 231 668
US-A- 3 423 541     US-A- 3 612 376
US-A- 4 096 533

(73) Titulaire: **SCHLUMBERGER INDUSTRIES**
**50, avenue Jean Jaurès**
**F-92120 Montrouge(FR)**

(72) Inventeur: **Abeille, Pierre**
**26, rue des Prés**
**F-92160 Antony(FR)**

EP 0 344 054 B1

## Description

La présente invention concerne un dispositif d'entraînement de bande pour enregistreur magnétique, et plus particulièrement du type à têtes tournantes, ainsi qu'un enregistreur pourvu d'un tel dispositif.

On sait que de tels enregistreurs comprennent une ou plusieurs têtes magnétiques d'enregistrement/lecture, fixées sur la périphérie d'un élément rotatif, coaxial à l'axe d'un tambour cylindrique contre la surface duquel est enroulée hélicoïdalement une bande magnétique défilant entre une bobine débitrice et une bobine réceptrice. Les informations sont enregistrées sur la bande selon des pistes obliques dont l'inclinaison est fonction du rapport des vitesses respectives de la bande et de la tête. Les enregistreurs de ce type comprennent deux familles. Dans la première famille, les têtes sont fixées sur la périphérie d'un plateau tournant, coaxial au tambour, et disposé dans une fente prévue dans un plan équatorial du tambour ; devant la fente défile ladite bande magnétique enroulée hélicoïdalement sur le tambour. Dans la seconde famille, le tambour comprend une partie inférieure fixe et une partie supérieure tournante à la base de laquelle les têtes sont fixées.

La mise en place et le déroulement de la bande par rapport au tambour, depuis la bobine débitrice vers la bobine réceptrice sont réalisés par des ensembles de galets et/ou aiguilles, respectivement disposés en amont et en aval du tambour.

L'entraînement en translation de la bande est réalisé par au moins un cabestan disposé en aval du tambour.

D'une manière générale, le frottement de la bande glissant sur un élément cylindrique (tel que le tambour) entraîne une augmentation de la tension de la bande en aval de ce dernier. En effet, soient "δ" l'angle d'enroulement de la bande sur l'élément (vu en plan), T1 et T2 les valeurs respectives de la tension de bande en amont et en aval dudit élément, et "f" le coefficient de frottement bande/élément fixe; tant que:

$$T2 < T1 \, e^{f\delta} \quad (1)$$

la bande ne glisse pas ; dès que

$$T2 = T1 \, e^{f\delta} \quad (2)$$

la bande se déplace en glissant sur l'élément fixe. Les relations (1) et (2) sont établies à un facteur constant près, fonction de la surface de contact entre la bande et l'élément fixe.

Ainsi, la tension T2 est fonction des valeurs de f et de δ. La valeur de δ est généralement fixe et imposée. En revanche, la valeur de f peut varier, en augmentant, compte-tenu des conditions d'humidité, de température ou de pression, ou de l'état de surface de la bande par exemple, et prendre des valeurs telles que la tension T2 soit excessive, empêchant le déroulement correct de la bande, voire portant atteinte à l'intégrité physique de celle-ci.

Il est donc important de pouvoir déterminer, ou à tout le moins maîtriser, la tension de la bande le long de celle-ci, et notamment en aval du tambour.

Or, si la tension T0 du brin de bande à la sortie de la bobine débitrice est facilement maitrisable, par exemple à l'aide d'un capteur de tension de bande asservissant la rotation de la bobine débitrice, il n'en est pas de même de la tension T2 du brin de bande en aval du tambour, qui est liée à une fonction de To, f et δ et d'autres paramètres selon le type de cabestan disposé en aval du tambour et dont sont pourvus les dispositifs connus.

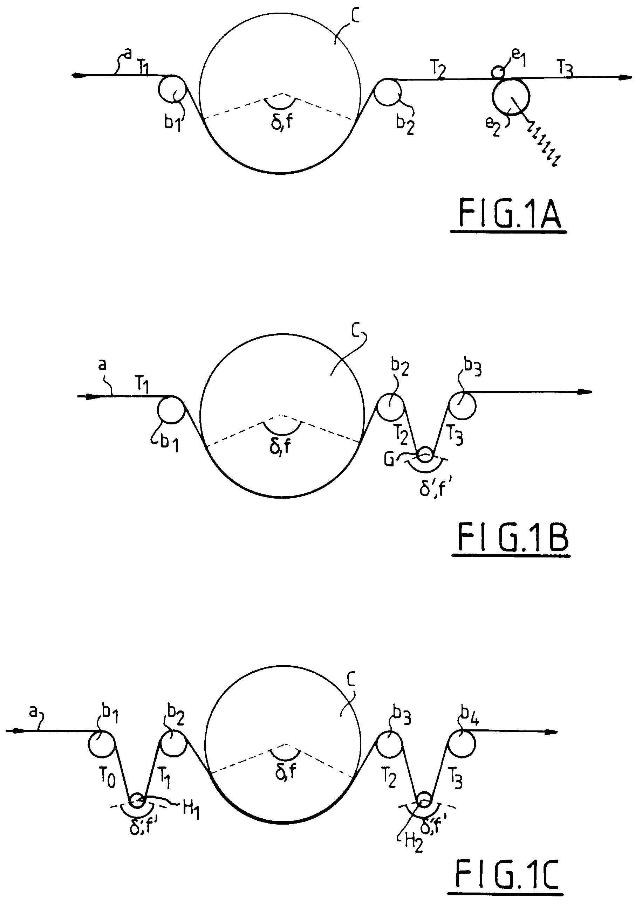

Sur la figure 1A est représenté schématiquement en vue de dessus, le chemin de bande d'un enregistreur pourvu d'un dispositif connu d'entrainement de bande. La bande "a" (de tension $T_1$) provient d'une bobine débitrice non représentée, passe sur un premier galet de renvoi "$b_1$", puis s'enroule sur un tambour "c" selon un angle "δ" et avec un coefficient de frottement "f", porte contre un second galet de renvoi "$b_2$" (la tension vaut $T_2$), et enfin est associée à un cabestan du type à galet presseur (comprenent un galet moteur "$e_1$" et un galet presseur "$e_2$" entre lesquels la bande est pincée); les tensions respectives T1 et T2 en amont et en aval du tambour satisfont la relation T2 = T1 $e^{f\delta}$. T2 dépend donc directement du coefficient de frottement f, et peut prendre des valeurs excessives, si la valeur de f augmente.

La figure 1B est un schéma similaire à celui de la figure 1A où le cabestan est du type dit à enveloppement, dans lequel la bande "a" est enroulée autour du galet moteur G selon un angle donné "δ'" et est entraînée sans glissement; la bande présente une tension T2 entre le tambour et le cabestan et une tension différente T3 en aval du cabestan ; T1, T2 et T3 satisfont les relations :

$$T1 \, e^{f\delta} = T2 < T3 \, e^{-f\delta'} \quad (3)$$

Au cas où la valeur de f augmente, T2 augmente à son tour, mais seulement jusqu'à une valeur limite pour laquelle la bande glisse sur le galet moteur. Le défilement de la bande n'est alors plus assuré de manière satisfaisante.

On a cherché de manière connue à remédier à ces inconvénients, par un dispositif, tel que représenté en vue du dessus sur la figure 1C pourvu de deux cabestans dits à enveloppement, à savoir un premier cabestan amont ($b_1$, $H_1$, $b_2$) et d'un se-

cond cabestan aval (b₃, H₂, b₄), les deux cabestans tournant à la même vitesse et étant du type à enveloppement. Soient To et T1 les valeurs de la tension de bande respectivement en amont et en aval du premier cabestan (To étant la tension à la sortie de la bobine débitrice), T2 et T3 les valeurs de la tension de bande respectivement en amont et en aval du second cabestan, $\delta'$ l'angle d'enroulement de la bande sur l'un ou l'autre des cabestans, et f' le coefficient de frottement de la bande sur les cabestans respectifs. Les relations suivantes sont vérifiées:

$$\text{To } e^{f\delta} \, e^{-f'\delta'} < T2 < T3 \, e^{f'\delta'} \qquad (4)$$

Si la valeur de f vient à augmenter, la valeur de T2 augmente jusqu'à ce que la bande glisse sur le second cabestan (aval) ; la bande n'est alors plus entraînée en aval du tambour, alors qu'elle continue à l'être en amont par le premier cabestan (amont) ; il apparait alors une accumulation de bande qui provoque un décollement de la bande du tambour et donc une diminution du frottement. Il s'ensuit une diminution de T2 qui permet au second cabestan d'entraîner à nouveau la bande.

Bien que ce dispositif connu (à deux cabestans) permette d'obtenir une sorte d'autorégulation du déroulement de la bande, il n'en présente pas moins des inconvénients.

La maîtrise du déroulement de la bande n'est que relative, compte tenu de la relation d'inégalité (4) précédente, liant les valeurs des tensions, des angles, et des coefficients de frottement.

De plus, il est nécessaire que les deux cabestans tournent à la même vitesse et donc de prévoir des moyens de synchronisation complexes et onéreux.

Enfin, la présence de deux cabestans complique la structure de l'enregistreur, conduit à un encombrement relativement important, augmente le coût de l'ensemble, et enfin est difficilement compatible avec des moyens de chargement mobile de bande.

Le document FR 2 130 346 décrit un système d'enregistrement-reproduction sur bande magnétique. Ce système a pour but de permettre l'utilisation de cassettes compactes et peu encombrantes. Pour assurer un bon défilement de la bande sur la surface de guidage du tambour, ce document préconise une légère augmentation de la tension de bande obtenue par une vitesse de rotation du cabestan situé en aval (du côté de la bobine réceptrice) supérieure à la vitesse de rotation du cabestan situé en amont (du côté de la bobine débitrice). La tension de bande est alors bien maîtrisée en amont, mais dépend de paramètres extérieures et aléatoires en aval.

Cette manière de faire, présente un inconvénient majeur lorsque les conditions extérieures de fonctionnement (comme le taux d'humidité) changent, surtout si l'enroulement de la bande est important.

En effet, dans ce cas, il peut se produire un étranglement de la bande entraînant sa déformation et des erreurs de lecture.

La présente invention permet de conserver un défilement optimum même avec un enroulement important de la bande autour du tambour. De manière plus générale, la présente invention vise à rémédier aux inconvénients des systèmes de l'art antérieur par un dispositif d'entraînement de bande, simple de conception et de fonctionnement, et permettant de bien maîtriser la tension de bande en aval du tambour.

A cette fin, selon l'invention, le dispositif pour l'entraînement d'une bande magnétique apte à défiler depuis une bobine débitrice vers une bobine réceptrice selon un trajet déterminé au cours duquel la bande est susceptible de s'enrouler selon un angle donné le long d'un élément fixe, (tel qu'un tambour cylindrique pourvu de têtes tournantes ou un ensemble de têtes linéaires fixes), et de glisser contre la surface de ce dernier, comprenant des premier et second moyens d'entraînement respectivement disposés en amont et en aval dudit élément, est caractérisé en ce que le moyen d'entraînement situé en aval comprend un cabestan et en ce que le moyen d'entraînement situé en amont comprend un galet autour duquel est enroulée la bande et le galet étant entraîné en rotation de façon que sa vitesse linéaire soit supérieure à la vitesse linéaire de la bande et de même sens que cette dernière et adapté pour permettre à la bande de glisser sur ledit galet.

Ainsi, la tension T2 de la bande en aval du tambour peut être maitrisée relativement facilement ; en effet, la valeur de T2 est liée à une fonction g (To, f, $\delta$, f', $\delta'$), non plus par une inégalité, comme dans l'art antérieur, mais par une égalité :

$$T2 = \text{To } e^{(fd - f'd')} \qquad (5)$$

et peut donc être déterminée par un choix judicieux des paramètres f, $\delta$, f', $\delta'$, (To étant mesurable ou déterminable).

De plus, les tolérances concernant la vitesse de rotation du galet sont très grandes, ce qui autorise l'utilisation des moyens d'entraînement du galet relativement simples et bon marché.

De préférence, le coefficient de frottement d'une part et l'angle d'enroulement d'autre part, de la bande sur le galet, sont sensiblement égaux respectivement au coefficient de frottement d'une part et à l'angle d'enroulement d'autre part, de la bande sur l'élément fixe.

La détermination de la tension T2 en aval de l'élément en est rendue encore plus aisée, puisque la relation (5) devient T2 = To, où To est la tension connue du brin de bande à la sortie de la bobine débitrice.

Avantageusement, dans le but de simplifier le dispositif et de réduire l'encombrement, le galet d'entraînement est lié au moteur du cabestan par des moyens de transmission mécaniques.

De manière avantageuse, la vitesse linéaire du galet d'entraînement est d'environ deux fois la vitesse linéaire de bande, ce qui procure des vitesses de glissement égales, d'une part entre la bande et l'élément fixe (tambour), et d'autre part entre la bande et le galet d'entrainement.

L'invention sera bien comprise à la lumière de la description qui suit, se référant au dessin annexé, dans lequel :

Les figures 1A, 1B, 1C sont des schémas en vue de dessus de dispositifs connus ;

La figure 2 est une vue en perspective d'un enregistreur connu et d'une cassette associée, auquel est susceptible de s'appliquer le dispositif selon l'invention; et

La figure 3 est un schéma en plan du dispositif selon l'invention.

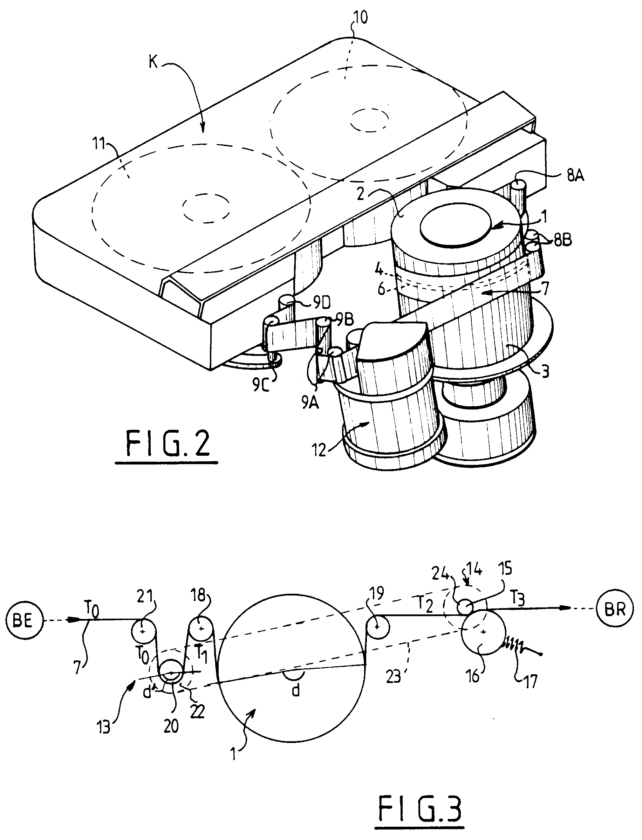

Le dispositif de la présente invention est décrit ci-après en relation avec un appareil d'enregistrement/lecture à têtes magnétiques tournantes, du type connu en soi, et dont un exemple de réalisation est représenté schématiquement sur la figure 2.

L'enregistreur/lecteur comporte un tambour cylindrique 1 constitué d'un tambour supérieur 2 et d'un tambour inférieur 3, séparés par une fente 4 disposée dans un plan équatorial, perpendiculaire à l'axe du tambour et sensiblement à mi-hauteur de ce dernier.

Dans cette fente, est prévu un élément en forme de disque, susceptible d'être animé d'un mouvement rotatif autour de l'axe du tambour. Le disque est porteur d'une, et généralement de plusieurs têtes magnétiques 6 disposées régulièrement sur sa périphérie et faisant très légèrement saillie par rapport à la surface définissant la paroi du tambour.

Il est entendu que l'invention est également susceptible de s'appliquer à un enregistreur à têtes tournantes dans lequel la partie supérieure du tambour est rotative et porte sur sa base les têtes ; de même qu'à un enregistreur à têtes linéaires fixes, ledit élément fixe étant alors constitué d'un support dans lequel les têtes sont disposées les unes au dessus des autres.

Une bande magnétique 7 est susceptible de s'enrouler hélicoïdalement autour du tambour 1 pour former, en vue de dessus un oméga. Un ensemble de galets 8A, 8B, 9A, 9B, 9C, 9D guident la bande 7 et la maintiennent selon cette configuration pendant son défilement, depuis une bobine débitrice 10 vers une bobine réceptrice 11 (connues en elles-mêmes) d'une cassette K. Les informations sont enregistrées/lues sur la bande selon des segments de pistes parallèles et obliques par rapport à l'axe de la bande.

La bande défile le long du trajet montré sur la figure 2 sous l'action de moyens d'entraînement constitué en l'espèce d'un cabestan 12, connu en soi, par exemple du type pourvu d'un galet presseur et d'un galet entraîné en rotation par un moteur, entre lesquels la bande est pincée.

L'enregistreur peut comprendre également des moyens dits de chargement de la bande depuis une position où celle-ci est dans la cassette K vers une position de fonctionnement, correspondant au trajet de bande montré sur la figure 1. Lesdits moyens de chargement comprennent des moyens de déplacement des galets 8 et 9.

En fonctionnement, la bande 7 est enroulée sur la surface du tambour selon un angle donné δ.

Pour des raisons de clarté et de simplification, l'enregistreur de la figure 2 ne comprend qu'un cabestan.

Le dispositif de l'invention, décrit ci-après en relation avec la figure 3, s'applique aux enregistreurs du type décrit précédemment, pourvu de premier et second moyens d'entraînement, respectivement disposés en amont et en aval du tambour.

Une bande 7 défile depuis une bobine débitrice BE vers un bobine réceptrice BR, le long d'un chemin comprenant successivement (d'amont vers l'aval) un premier ensemble d'entraînement 13, un tambour 1 pourvu d'une ou plusieurs têtes tournantes, et un second ensemble d'entraînement 14. Les flèches indiquées sur la bande 7 montrent le sens de défilement de la bande.

Le second ensemble d'entraînement 14 (ou ensemble aval) est constitué d'un cabestan du type dit à galet presseur, connu en soi, et comprenant un galet moteur 15 et un galet presseur 16 entre lesquels la bande est pincée. Le galet presseur est associé à un organe de pression, tel qu'un ressort 17. La bande est entraînée sans glissement.

De façon connue, la bande est enroulée hélicoïdalement autour du tambour 1 selon un angle d'enroulement $\underline{d}$, depuis un galet 18 de défilement amont et un galet 19 de défilement aval. La bande glisse sur le tambour 1, avec un coefficient de frottement f.

Selon l'invention, le premier ensemble d'entraînement 13 (ou ensemble amont) comprend un galet entraîné 20 autour duquel s'enroule la bande 7 selon un angle δ', et un galet de renvoi 21 disposé en amont du galet 20; à la sortie de ce dernier la bande s'enroule autour du galet amont d'enroulement 18.

Le galet entraîné 20 présente une vitesse de rotation telle que sa vitesse linéaire soit sensiblement supérieure à celle de la bande.

Ainsi, la bande glisse sur le galet entraîné 20, avec un coefficient de frottement $\underline{f'}$.

Les coefficients de frottement $\underline{f}$ et $\underline{f'}$ sont fonctions des matériaux constitutifs de la bande, du galet 20 et du tambour.

De préférence, le galet 20 de l'ensemble amont d'entraînement 13, est entraîné (via des organes de transmission mécanique) par le moteur du galet 15 de l'ensemble aval d'entraînement 14.

A cette fin, le galet entraîné 20 est solidaire d'une poulie 22 sur laquelle s'engage une courroie 23 portant également sur une poulie 24 rapportée sur l'axe du moteur du galet cabestan 15.

Ainsi, un seul moteur suffit pour assurer le défilement de la bande par deux ensembles d'entraînement distincts.

Cette disposition simple n'affecte pas la fiabilité; en effet, la valeur de la vitesse de rotation du galet entraîné 20 ne requière pas une grande précision.

A titre indicatif, la valeur de la vitesse linéaire du galet 20 est de l'ordre d'environ deux fois celle de la vitesse linéaire du galet cabestan 15.

La tension de la bande présente des valeurs $\underline{Ti}$ différentes le long du chemin de bande, à savoir successivement T0 à la sortie de la bobine émettrice (égale à la tension en amont du galet entraîné 20), T1 en aval de ce dernier (égale à la tension en amont du tambour 1), T2 en aval du tambour 1 (égale à la tension en amont du galet cabestan 15), et enfin T3 en aval de ce dernier.

Les conditions de glissement de la bande dans un sens, sur le galet entraîné 20, sont équivalentes au glissement de la bande sur le même galet mais fixe et dans l'autre sens de défilement de la bande, on a compte tenu de l'égalité (2) :

$$To = T1\, e^{f'\delta'} \qquad (6)$$

De même, on déduit des conditions de glissement de la bande sur le tambour :

$$T2 = To\, e^{(f\delta - f'\delta')} \qquad (8)$$

La tension de bande T2 peut être déterminée par les paramètres f, f', $\delta$, et $\delta'$ et la valeur connue de TO.

Usuellement, la valeur de l'angle d'enroulement $\delta$ de la bande sur le tambour est donnée et imposée. De même, la valeur du coefficient de frottement $\underline{f}$ est imposée, etant principalement fonction des matériaux constituants la bande et le tambour et de l'état de surface de ce dernier.

Si on fait appel à un galet entraîné 20 réalisé dans le même matériau et présentant le même état de surface que le tambour, on obtient $\underline{f} = \underline{f'}$.

De même, si l'on fait en sorte que l'angle d'enroulement de la bande sur le galet 20 soit le même que celui de la bande sur le tambour, on a $\delta = \delta'$.

La tension T2, donné par l'équation (8), devient alors :

$$T2 = TO \qquad (9)$$

T2 est ainsi très aisément déterminable, ce qui permet de maîtriser parfaitement la tension de bande en aval du tambour.

Le dispositif fonctionne également lorsque la bande défile dans le sens contraire à celui indiqué sur la figure 2.

Dans ce cas, le défilement est assuré par le galet cabestan 15, le galet entraîné 20 jouant un rôle auxiliaire d'entraînement.

En variante, le dispositif selon l'invention, décrit précédemment, peut comporter un ensemble aval d'entraînement du type à cabestan dit à enroulement (la bande enroulant le galet cabestan et étant entraînée sans glissement).

## Revendications

1. Dispositif pour l'entraînement d'une bande magnétique (7) apte à défiler depuis une bobine débitrice (BE) vers une bobine réceptrice (BR) selon un trajet déterminé au cours duquel la bande est susceptible de s'enrouler selon un angle donné ($\delta$) le long d'un élément fixe, tel qu'un tambour cylindrique (1) pourvu de têtes tournantes, et de glisser contre la surface de ce dernier, comprenant des premier et second moyens d'entraînement respectivement disposés en amont et en aval dudit élément, caractérisé en ce que le moyen d'entraînement situé en aval comprend un cabestan (15, 16) et en ce que le moyen d'entraînement situé en amont comprend un galet (20) autour duquel est enroulée la bande et le galet étant entraîné en rotation de façon que sa vitesse linéaire soit supérieure à la vitesse linéaire de la bande et de même sens que cette dernière et adapté pour permettre à la bande de glisser sur ledit galet.

2. Dispositif selon la revendication 1, caractérisé en ce que le coefficient de frottement (f') d'une part et l'angle d'enroulement ($\delta'$) d'autre part, de la bande (7) sur le galet (20), sont sensiblement égaux respectivement au coefficient de frottement (f) d'une part et à l'angle d'enroulement ($\delta$) d'autre part, de la bande (7) sur l'élément fixe.

3. Dispositif selon l'une des revendications 1 ou 2, caractérisé en ce que le galet d'entraînement (20) est lié au moteur du cabestan (15, 16) par des moyens de transmission mécaniques (22, 23, 24).

4. Dispositif selon l'une des revendications 1 à 3, caractérisé en ce que le moyen d'entraînement situé en amont comporte un galet (20) unique et en ce que le moyen d'entraînement situé en aval comprend un galet moteur (15) et un galet presseur (16).

5. Dispositif selon l'une des revendications 1 à 4, caractérisé en ce que la vitesse linéaire du galet d'entraînement (20) est inférieure à quatre fois la vitesse linéaire de bande, et de préférence sensiblement égale à deux fois celle-ci.

6. Enregistreur/lecteur magnétique à bande pourvu d'un dispositif selon l'une des revendications précédentes.

**Claims**

1. A device for driving magnetic tape (7) suitable for running from a pay-out spool (DE) to a take-up spool (BR) along a determined path during which the tape is wound through a given angle ($\delta$) around a stationary element such as a cylindrical drum (1) provided with rotary heads, and is caused to slip over the surface thereof, the device comprising first and second drive means disposed respectively upstream and downstream from said element, characterized in that the drive means disposed downstream includes a capstan (15, 16) and in that the drive means disposed upstream includes a wheel (20) having the tape wound thereabout, said wheel being rotated so that its linear speed is greater than the linear speed of the tape and is in the same direction as the linear speed of the tape, and is suitable for enabling the tape to slip over said wheel.

2. A device according to claim 1, characterized in that both the coefficient of friction (f') and the winding angle ($\delta$') between the tape (7) and the wheel (20) are substantially equal respectively to the coefficient of friction (f) and the winding angle ($\delta$) between the tape (7) and the stationary element.

3. A device according to claim 1 or 2, characterized in that the drive wheel (20) is coupled to the capstan motor (15, 16) by mechanical transmission means (22, 23, 24).

4. A device according to any one claims 1 to 3, characterized in that the upstream drive means comprises a singular wheel (20) and in that downstream drive means comprises a motor wheel (15) and a pinch wheel (16).

5. A device according to any one of claims 1 to 4, characterized in that the linear speed of the drive wheel (20) is less than four times the linear speed of the tape, and is preferably substantially equal to twice said speed.

6. A magnetic tape recorder/reader provided with a device according to any preceeding claim.

**Patentansprüche**

1. Vorrichtung zum Antreiben eines Magnetbandes (7), das von einer Abgabespule (BE) zu einer Aufnahmespule (BR) längs einer vorbestimmten Bahn laufen kann, auf der sich das Band mit einem gegebenen Winkel ($\delta$) um ein festes Element wie eine zylindrische Trommel (1) schlingen kann, das mit sich drehenden Köpfen versehen ist und auf dessen Oberfläche es gleiten kann, mit ersten und zweiten Antriebsmitteln, die vor bzw. nach diesem Element angeordnet sind, dadurch gekennzeichnet, daß das Antriebsmittel, das davor angeordnet ist, einen Kapstan-Antrieb (15, 16) aufweist und daß das danach angeordnete Antriebsmittel eine Rolle (20) enthält, um die das Band herumgeführt ist, wobei diese Rolle so gedreht wird, daß ihre lineare Geschwindigkeit größer als die lineare Geschwindigkeit des Bandes ist und die gleiche Richtung wie diese hat und dabei so angepaßt ist, daß das Band um die Rolle gleiten kann.

2. Vorrichtung nach Anspruch 1, dadurch gekennzeichnet, daß einerseits der Reibungskoeffizient (f') und andererseits der Umschlingungswinkel ($\delta$') des Bandes (7) an der Rolle (20) im wesentlichen gleich einerseits dem Reibungskoeffizienten (f) bzw. andererseits Umschlingungswinkel ($\delta$) des Bandes (7) an dem festen Element sind.

3. Vorrichtung nach einem der Ansprüche 1 oder 2, dadurch gekennzeichnet, daß die Antriebsrolle (20) mit dem Motor des Kapstan-Antriebs (15, 16) über mechanische Übertragungsmittel (22, 23, 24) verbunden ist.

4. Vorrichtung nach einem der Ansprüche 1 bis 3, dadurch gekennzeichnet, daß das dahinter angeordnete Antriebsmittel eine einzige Rolle (20) aufweist und daß das davor angeordnete Antriebsmittel eine Motorrolle (15) und eine Andruckrolle (16) aufweist.

5. Vorrichtung nach einem der Ansprüche 1 bis 4, dadurch gekennzeichnet, daß die lineare Geschwindigkeit der Antriebsrolle (20) kleiner als der vierfache Wert der linearen Geschwindigkeit des Bandes und vorzugsweise zweimal so groß wie diese ist.

6. Magnetband-Schreib/Lese-Vorrichtung, versehen mit einer Vorrichtung nach einem der vorhergehenden Ansprüche.

FIG.1A

FIG.1B

FIG.1C

FIG.2

FIG.3